# FASCICULE DE BREVET EUROPEEN

(11) **EP 1 537 049 B1**
(45) Date de publication et mention de la délivrance du brevet: **16.08.2006**
(21) Numéro de dépôt: 03769604.4
(22) Date de dépôt: 10.09.2003
(51) Int. Cl.: C01G 31/00

(54) **PROCEDE DE FABRICATION DE POUDRES CRISTALLINE D OXYDE DE LIT HIUM ET DE VANADIUM**
VERFAHREN ZUR HERSTELLUNG VON KRISTALLINEM LITHIUMOXID/VANADIUMOXID-PULVER
METHOD OF PRODUCING CRYSTALLINE LITHIUM/VANADIUM OXIDE POWDER

(30) Priorité: 13.09.2002 FR 0211370
(43) Date de publication de la demande: 08.06.2005
(73) Titulaire: MSSA, 73600 Saint Marcel (FR)
(72) Inventeur: Harabasz, Arnaud, F-73600 Saint Marcel (FR); LE MOUELLIC, Christian, F-73600 Moutiers (FR); Pointu, Lionel, F-73800 Montmelian (FR); FLACHER, Pierre, F-73260 Aigueblanche (FR)
(74) Mandataire: Schmidt, Martin Peter
(86) Numéro de dépôt international: PCT/FR2003/002685
(87) Numéro de publication internationale: WO 2004/024631

(56) Documents cités:
- US-A- 5 512 214
- DATABASE WPI Section Ch, Week 200322 Derwent Publications Ltd., London, GB; Class A85, AN 2003-227795 XP002267979 & SG 86 325 A (UNIV SINGAPORE NAT) 19 février 2002 (2002-02-19)

## Description

### Domaine technique

L'invention concerne un procédé de fabrication d'une poudre cristalline d'oxyde mixte de lithium et vanadium de formule Li₁+ₓV₃O₈, x étant compris entre 0 et 0,2. Ce produit est destiné notamment à la fabrication d'électrodes de piles et batteries rechargeables au lithium.

### Etat de la technique

Les méthodes existantes de synthèse de l'oxyde mixte Li₁₊ₓV₃O₈ ont en commun la réaction d'un composé de vanadium sur un sel de lithium. Elles se distinguent selon qu'elles ont recours ou non à un solvant.

L'usage de l'eau comme solvant, conduisant à la formation d'un gel, est connue par le brevet US5039582 (PISTOIA). Ce gel, obtenu après plus de 24 heures à partir de LiOH et de V₂O₅, est difficile à filtrer et à sécher. Le brevet US 6177130 (FREY) fait mention d'une solution aqueuse de lithine et d'acide vanadique préparé par passage de métavanadate d'ammonium (MVA) sur une résine. Cette solution est séchée et son résidu redissout dans un solvant organique pour générer un produit pour l'application couche mince de qualité optique. L'usage de solvant organique est mentionné, par exemple dans le brevet US 5549880 (KOKSBANG) ou la demande de brevet WO 01/22507 (3M), mais pose des problèmes d'environnement et de sécurité au stade industriel. Quelque soit le type de solvant, les procédés connus sont discontinus et limités par l'étape de filtration.

Sans solvant, il est possible de travailler sur un mélange de solides. L'obtention du composé final passe par la fusion du mélange, comme décrit dans le brevet US 5013620 (Bridgestone) et dans l'article de A.D. WADSLEY, Acta Cryst. 10(1957)261, ou une conversion légèrement sous le point de fusion comme dans le brevet US 5520903 (CHANG). Ces procédés posent le problème de transport et de broyage d'un matériau en blocs fondus ou frittés.

Le brevet US 6136476 (Hydro-Québec et 3M) décrit le mélange de poudres sèches d'un composé de lithium et d'un composé de vanadium, leur broyage au jet, et le chauffage en dessous de la température de fusion. Le procédé permet une bonne maîtrise de la granulométrie dans toute les étapes de la fabrication, le nombre d'étapes restant assez limité.

Cependant, la voie solide présente un certain nombre d'inconvénients par rapport à l'utilisation d'un solvant, qui permet un mélange plus intime des réactifs, et donc une réaction plus efficace, ainsi qu'une mise en oeuvre plus aisée. Dans le cas de la synthèse d'un matériau cristallisé, la cristallisation après solvatation peut se faire à plus basse température que par voie solide, ce qui est plus commode et plus économique. Enfin, lorsqu'un des réactifs est lui-même obtenu en solution, le procédé avec solvant peut permettre de faire l'économie d'un séchage.

L'invention a pour but de fournir un procédé de fabrication d'une poudre cristalline de Li₁₊ₓV₃O₈ quasi-continu, aisément industrialisable avec un nombre limité d'étapes, permettant la maîtrise de la granulométrie à chaque étape, à partir des réactifs métavanadate d'ammonium (MVA) et lithine.

### Objet de l'invention

L'invention a pour objet un procédé de fabrication d'une poudre cristalline d'oxyde mixte de lithium et vanadium de formule Li₁₊ₓV₃O₈, x étant compris entre 0 et 0,2, comportant :
- la formation d'une suspension aqueuse à partir d'une pâte de NH₄VO₃ et de poudre de lithine mono-hydratée,
- la déshydratation en continu de cette suspension dans un courant de gaz chaud à une température comprise entre 200 et 600°C pour former une poudre sèche d'un précurseur de granulométrie comprise entre 10 et 100 µm,
- la calcination de ce précurseur à une température comprise entre 380 et 580°C en une poudre cristalline de Li₁₊ₓV₃O₈.

### Description de l'invention

Le procédé commence par la mise en mise en suspension aqueuse de MVA pâteux et de poudre de lithine mono-hydratée dans un rapport de masse permettant l'obtention de la stoechiométrie Li/V désirée pour Li₁₊ₓV₃O₈, avec x compris entre 0 et 0.2. Le ratio solide sur masse totale est compris entre 40 et 60%.

L'utilisation d'un solvant permet un mélange plus intime des réactifs et une mise en oeuvre plus aisée que la voie solide. De plus, dans le cas particulier de la synthèse d'un matériau cristallisé monophasé, la voie solvant nécessite des températures de cristallisation plus faibles que la voie solide et donc un coût énergétique plus faible.

Le recours à un solvant aqueux présente un avantage technico-économique par rapport au procédé décrit dans le brevet US 6136476. En effet, le déroulement de la synthèse minérale du MVA impose son obtention à l'état humide avant sa calcination ou son séchage. Qu'il s'agisse de l'emploi d'un MVA ultra-pur ou d'un MVA, produit intermédiaire du V₂O₅ dans le cycle minier d'extraction hydrométallurgique du vanadium, l'étape de séchage n'est pas utile, et le MVA humide, pâteux ou en suspension, peut être directement injecté dans le procédé. Par ailleurs, le recyclage de l'effluent ammoniac peut être intéressant, d'un point de vue économique et environnemental, dans le cadre d'une intégration à l'hydrométallurgie du vanadium consommatrice de ce gaz.

La suspension ainsi obtenue est maintenue agitée dans une atmosphère neutre, par exemple d'azote, entre ½ et 24 h, et entre 20 et 90°C, jusqu'à son introduction dans un pulvérisateur à jet de gaz chaud, par exemple un appareil RINAJET de la société RIERA NADEU S.A.. Les forts débits turbulents de gaz chauds (250-600°C) de cet appareil permettent une déshydratation instantanée du produit solide et l'obtention d'un précurseur du produit final sous la forme d'une poudre sèche de granulométrie comprise entre 10 et 100 µm.

La suspension agitée ne présente pas les caractéristiques rhéologiques d'un gel et la technologie de déshydratation employée contourne ainsi l'étape de filtration difficile qu'utilise les autres procédés de l'art antérieur utilisant la voie « sol-gel ».

La poudre obtenue est chargée dans un four à tapis assurant l'étape de calcination entre 380 et 580°C, et évitant la ré-agglomération du produit. Cette étape permet la formation du produit Li₁₊ₓV₃O₈, cristallisé sans dégradation de la granulométrie, qui reste comprise entre 10 et 100 µm. Ce produit peut être optionnellement micronisé et/ou mélangé à du noir de carbone.

Par rapport aux autres procédés utilisant un solvant, le procédé selon l'invention permet un fonctionnement moins discontinu. Le temps nécessaire de mise en contact en suspension est plus faible que celui de la formation d'un gel. On évite ainsi l'étape difficile de la filtration d'un gel, et on privilégie au contraire la déshydratation de la suspension par alimentation continue dans un jet de gaz chaud, à l'aide par exemple d'un appareil de la gamme commerciale RINAJET (RIERA NADEU SA) à haut débit massique.

### Description des figures

La figure 1 représente le diagramme de diffraction X du produit final de l'exemple 1.

La figure 2 représente le diagramme de diffraction X du produit final de l'exemple 2.

### Exemples

### Exemple 1 : LiV₃O₈, de pureté standard

4872 g de MVA ALDRICH de pureté 98,6%(poids sec) et 584 g de LiOH, H₂O ALDRICH de pureté 99.6% sont mis en suspension dans de l'eau distillée en respectant un ratio de 300 ml de solvant par mole de LiV₃O₈

La dizaine de litres de suspension ainsi produite est maintenue agitée à 50°C pendant 24 heures sous azote. Elle est introduite dans un modèle réduit des appareils de la gamme commerciale RINAJET de la société RIERA NADEU S.A. à 1 l/h avec une température d'entrée de gaz chaud de 280°C.

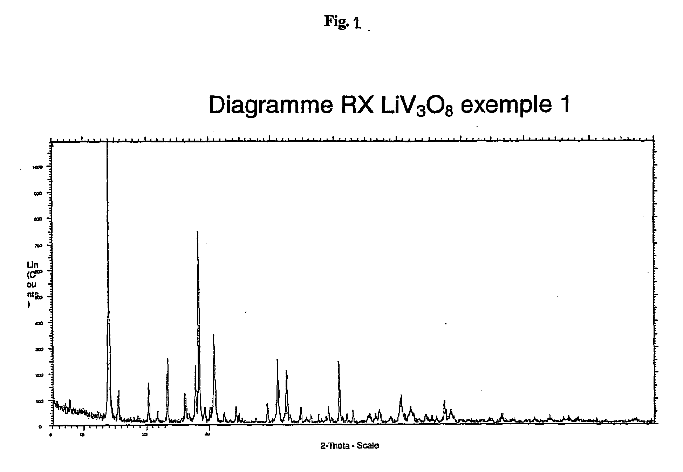

La poudre déshydratée ainsi obtenue est calcinée en barquette 10 heures à 400°C pour donner au final un produit identifié par diffraction X comme du LiV₃O₈ avec comme impureté V₂O₅, dont la raie la plus intense se trouve à 2θ = 20,27°, comme représenté par le diagramme de la figure 1 Cette caractérisation est effectuée à l'aide d'un diffractomètre Siemens D-5000, avec la raie Kα du cuivre, en 2θ variant de 5 à 100° par pas de 0,02° et 2 s par pas. Le produit contient, en poids, 2,35% de lithium et 52,2% de vanadium, dont 2,21% de V⁺⁴.

### Exemple 2 : Li_{1,2}V₃O₈ de grande pureté

Dans un premier temps, on produit du MVA de haute pureté par un procédé original : 150 kg de VOCl₃ sont extraits de la production courante de la demanderesse. Dans un réacteur agité, ils sont injectés dans une solution NH₄OH préparée préalablement à partir de 1 m³ d'eau et 90 kg d'ammoniac. Par maîtrise de la température et du PH, le MVA est précipité, lavé et filtré sur toile pour être finalement déchargé sous forme de pâte humide entre 30 et 50% d'humidité.

Deux batches du procédé ci dessus permettent d'extraire 216 kg de MVA de haute pureté (poids sec), pour un poids humide de 336 kg, dont la composition figure au tableau 1 :

**Tableau 1**

| Elément | Cl- | V⁺⁴ | Fe | Na | Mo | K | Al | Si | Ca | Zn | Mg | Cu | Pb | Ni | Co |
|---|---|---|---|---|---|---|---|---|---|---|---|---|---|---|---|
| Teneur (ppm) | 25 | 114 | 6 | 5 | 5 | 3 | 25 | - | 7 | 4 | 3 | 3 | 4 | 4 | <10 |

31 kg de LiOH,H₂O de la société FMC, dissoute dans de l'eau distillée puis mélangée aux 336 kg de MVA humide, permettent d'obtenir 320 l de suspension. Laissée agitée à 4°C pendant 24 heures, elle est ensuite introduite dans un appareil S1008 de la gamme RINAJET de RIERA NADEU S.A. à 60 l/h avec une température de gaz d'entrée de 350°C.

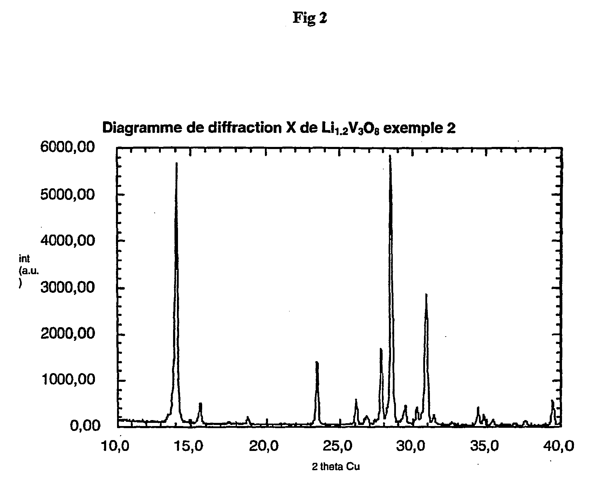

Sur cet essai, 120 kg de poudre déshydratée, sortant à 80°C, sont récupérés. Quelques dizaines de kg extraits sont calcinés 10 h à 400°C. La granulométrie du produit final, mesurée par granulométrie laser sur un appareil Malvem Instruments, est telle que 90% en volume de poudre sont inférieurs à 15,3 µm. Le diagramme de diffraction X, représenté à la figure 2, est celui d'un cristal de Li_{1.2} V₃O₈ ayant comme impureté LiVO₃, repérable par son pic de plus haute intensité à 2θ = 18,64°. La caractérisation est réalisée sur un diffractomètre Siemens D-500, avec la raie Kα du cuivre, en faisant varier 2θ de 10 à 70° par pas de 0,04° à 15 s par pas. La composition du produit obtenu est indiquée au tableau 2 :

**Tableau 2**

| Elément | Li | V | Fe | Na | Mo | K | AI | Si | Ca | Zn | Mg | Cu | Pb | Ni | Co |
|---|---|---|---|---|---|---|---|---|---|---|---|---|---|---|---|
| Teneur (ppm) | 2.9% | 51 % | 40 | 50 | 30 | 40 | 25 | <20 | 45 | 5 | 12 | 15 5 | <1 | 20 | 2 |

## Revendications

1. Procédé de fabrication d'une poudre cristalline d'oxyde mixte de lithium et vanadium de formule Li₁₊ₓV₃O₈, x étant compris entre 0 et 0,2, comportant :
- la formation d'une suspension aqueuse à partir d'une pâte de NH₄VO₃ et de poudre de lithine mono-hydratée,
- la déshydratation en continu de cette suspension dans un courant de gaz chaud à une température comprise entre 200 et 600°C pour former une poudre sèche d'un précurseur de granulométrie comprise entre 10 et 100 µm,
- la calcination de ce précurseur à une température comprise entre 380 et 580°C en une poudre cristalline de Li₁₊ₓV₃O₈.

2. Procédé selon la revendication 1, **caractérisé en ce que** la suspension est agitée avant son introduction dans le courant de gaz chaud.

3. Procédé selon l'une des revendications 1 ou 2, **caractérisé en ce que** la granulométrie du produit final est comprise entre 10 et 100 µm.

4. Procédé selon l'une des revendications 1 à 3, **caractérisé en ce que** la pâte de NH₄VO₃ est une pâte de haute pureté préparée par réaction de VOCl₃ avec NH₄OH.

## Claims

1. Process for the preparation of a crystalline powder of a mixed lithium-vanadium-oxide of the formula Li₁₊ₓV₃O₈, wherein x is comprised between 0 and 0.2, comprising
- the formation of an aqueous suspension of a paste of NH₄VO₃ and a powder of lithium hydroxide monohydrate,
- the continuous dehydratation of said suspension in a hot gas stream at a temperature comprised between 200 and 600°C to form a dry powder of a precursor of a grain size comprised between 10 and 100 µm,
- the calcination of said precursor at a temperature comprised between 380 and 580°C to form a crystalline powder of Li₁₊ₓV₃O₈.

2. Process according to claim 1, **characterized in that** the suspension is agitated prior to its introduction in the hot gas stream.

3. Process according to claims 1 or 2, **characterized in that** the grain size of the final product is comprised between 10 and 100 µm.

4. Process according to any of claims 1 to 3, **characterized in that** the NH₄VO₃ - paste is a high purity paste prepared by the reaction of VOCl₃ with NH₄OH.

## Patentansprüche

1. Verfahren zur Herstellung eines kristallinen Pulvers eines Lithium-Vanadium-Mischoxydes der Formel Li₁₊ₓV₃O₈, wobei x zwischen 0 und 0,2 liegt, beinhaltend
- die Herstellung einer wässrigen Suspension aus einer NH₄VO₃ - Paste und einem Pulver aus Lithiumhydroxyd-Monohydrat,
- die kontinuierliche Entwässerung dieser Suspension in einem heissen Gasstrom bei einer Temperatur zwischen 200 und 600°C, wobei ein trockenes Pulver eines Vorläufers mit einer Korngrösse zwischen 10 und 100 µm gebildet wird,
- die Kalzinierung dieses Vorläufers bei einer Temperatur zwischen 380 und 580°C zu einem kristallinen Li₁₊ₓV₃O₈ Pulver.

2. Verfahren nach Anspruch 1, **dadurch gekennzeichnet, dass** die Suspension vor ihrer Einführung in den heissen Gasstrom gerührt wird.

3. Verfahren nach Ansprüchen 1 oder 2, **dadurch gekennzeichnet, dass** die Korngrösse des Endproduktes zwischen 10 und 100 µm liegt.

4. Verfahren nach irgendeinem der Ansprüche 1 bis 3, **dadurch gekennzeichnet, dass** die NH₄VO₃ - Paste eine hochreine Paste ist, die durch Reaktion von VOCl₃ mit NH₄OH hergestellt wurde.
